(19) Europäisches Patentamt / European Patent Office / Office européen des brevets

(11) **EP 4 306 902 A1**

(12) **EUROPEAN PATENT APPLICATION**
published in accordance with Art. 153(4) EPC

(43) Date of publication:
**17.01.2024 Bulletin 2024/03**

(21) Application number: **22767155.9**

(22) Date of filing: **08.03.2022**

(51) International Patent Classification (IPC):
*G01B 11/00* (2006.01)   *G01B 11/16* (2006.01)
*G01B 11/26* (2006.01)   *G01B 9/02* (2022.01)

(52) Cooperative Patent Classification (CPC):
**G01B 9/02; G01B 11/00; G01B 11/16; G01B 11/26**

(86) International application number:
**PCT/JP2022/010067**

(87) International publication number:
**WO 2022/191201 (15.09.2022 Gazette 2022/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.03.2021   JP 2021038743**

(71) Applicant: NAGANO KEIKI CO., LTD.
**Tokyo 143-8544 (JP)**

(72) Inventors:
• **OGAWA, Ken**
  **Tokyo 143-8544 (JP)**
• **FUJITA, Keiichi**
  **Tokyo 143-8544 (JP)**
• **YAMATE, Tsutomu**
  **Tokyo 143-8544 (JP)**
• **HATCHO, Kenta**
  **Tokyo 143-8544 (JP)**

(74) Representative: **Page White Farrer**
  **Bedford House**
  **21a John Street**
  **London WC1N 2BF (GB)**

(54) **PHYSICAL QUANTITY MEASUREMENT DEVICE**

(57)   A physical quantity measuring device (1) includes: a first light source (11) configured to output a first light (L1); a second light source (12) configured to output a second light (L2); an optical sensor (40) letting in the first light (L1) outputted from the first light source (11) and outputting a measurement light (M1) according to a physical quantity of an object and the first light (L1); a wedge (62) configured to let in the measurement light (M1) and the first light (L1) outputted from the optical sensor (40) and output a first outgoing light and let in the second light (L2) outputted from the second light source (12) and output a second outgoing light; a first light path for the first light (L1) outputted from the first light source (11) to be outputted to the optical sensor (40) and for the measurement light (M1) and the first light (L1) outputted from the optical sensor (40) to be outputted to the wedge (62); and a second light path for the second light (L2) outputted from the second light source (12) to be outputted to the wedge (62).

FIG.1

EP 4 306 902 A1

**Description**

TECHNICAL FIELD

The present invention relates to a physical quantity measuring device.

BACKGROUND ART

A typical optical measurement system including an optical element is known (for instance, Patent Literature 1 and the like).
In an optical measurement system as disclosed in Patent Literature 1, a physical quantity such as pressure is allowed to be detected with a high sensitivity by analyzing an interfering light outputted from an interferometer including an optical element, or wedge.

CITATION LIST

PATENT LITERATURE(S)

Patent Literature 1: US 2006/0061768 A1

SUMMARY OF THE INVENTION

PROBLEM(S) TO BE SOLVED BY THE INVENTION

In the meanwhile, as for an interferometer as described in Patent Literature 1, it is known that a disturbing signal due to a smudge or the like sticking to a wedge or any other optical component on a light path has an influence on a measurement result. Accordingly, the disturbing signal may be measured in advance to correct the influence. However, if an environmental factor such as temperature changes while the optical measurement system measures a physical quantity, the disturbing signal itself changes. In a case where correction is based on the disturbing signal obtained in advance, the correction thus fails to be appropriately performed and the accuracy of the detection of the physical quantity is lowered.
An object of the invention is to provide a physical quantity measuring device allowed to appropriately correct, even if an environmental factor such as temperature changes during measurement of a physical quantity, an influence of the change.

MEANS FOR SOLVING THE PROBLEM(S)

A physical quantity measuring device according to an aspect of the invention includes: a first light source configured to output a first light; a second light source configured to output a second light; an optical sensor configured to let in the first light outputted from the first light source and output a measurement light according to a physical quantity of an object and the first light; an optical element configured to let in the measurement light and the first light outputted from the optical sensor and output a first outgoing light and let in the second light outputted from the second light source and output a second outgoing light; a first light path for the first light outputted from the first light source to be outputted to the optical sensor and for the measurement light and the first light outputted from the optical sensor to be outputted to the optical element; and a second light path for the second light outputted from the second light source to be outputted to the optical element.
In the aspect of the invention, the first light path for the first light outputted from the first light source to be outputted to the optical sensor and for the measurement light and the first light outputted from the optical sensor to be outputted to the optical element and the second light path for the second light outputted from the second light source to be outputted to the optical element are provided. Moreover, the optical element is configured to let in the measurement light and the first light outputted from the optical sensor and output the first outgoing light and let in the second light outputted from the second light source and output the second outgoing light. This makes it possible to correct the first outgoing light according to the measurement light and the first light with the second outgoing light according to the second light as needed. This makes it possible to reduce an influence of a change in an environmental factor on the first outgoing light.
In the above aspect of the invention, it is preferable that the physical quantity measuring device further include an interferometer including a wedge, the wedge being the optical element, the interferometer being configured to output a first interfering light according to the measurement light.

In this configuration, the interferometer including the wedge as the optical element is provided. Moreover, the interferometer is configured to output the first interfering light according to the measurement light. This makes it possible to calculate the physical quantity of the object by detecting a phase change in interference fringes of the first interfering light according to the measurement light.

In the above aspect of the invention, it is preferable that the first light path and the second light path each include an optical fiber, and the optical fiber be provided with an optical coupler.

In this configuration, the first light path and the second light path each include an optical fiber. This makes it possible to reliably guide the first light outputted from the first light source to the optical sensor and reliably guide the measurement light outputted from the optical sensor to the optical element. Further, it is possible to reliably guide the second light outputted from the second light source to the optical element.

In addition, the optical fiber is provided with the optical coupler, which makes it possible to achieve switching between the first light path and the second light path by a simple configuration.

A physical quantity measuring device according to another aspect of the invention includes: a third light source configured to output a third light; an optical sensor configured to let in the third light outputted from the third light source and output a measurement light according to a physical quantity of an object and the third light; an optical element configured to let in the measurement light and the third light outputted from the optical sensor and output a third outgoing light and let in the third light outputted from the third light source and output a fourth outgoing light; a third light path for the third light outputted from the third light source to be outputted to the optical sensor and for the measurement light and the third light outputted from the optical sensor to be outputted to the optical element; a fourth light path for the third light outputted from the third light source to be outputted to the optical element; and an optical switching element configured to switch a light path for the third light outputted from the third light source between the third light path and the fourth light path.

In the above aspect of the invention, the third light path for the third light outputted from the third light source to be outputted to the optical sensor and for the measurement light and the third light outputted from the optical sensor to be outputted to the optical element and the fourth light path for the third light outputted from the third light source to be outputted to the optical element are provided. In addition, the optical element is configured to let in the measurement light and the third light outputted from the optical sensor and output the third outgoing light and let in the third light outputted from the third light source and output the fourth outgoing light. Moreover, the optical switching element configured to switch the light path for the third light outputted from the third light source between the third light path and the fourth light path is provided. This makes it possible to correct the third outgoing light according to the measurement light and the third light with the fourth outgoing light according to the third light as needed. This makes it possible to reduce an influence of a change in an environmental factor on the third outgoing light. Further, since the optical switching element switches the light path for the third light, a light source for measurement and a light source for reference are allowed to be provided by a single light source to reduce the number of light sources.

In the above aspect of the invention, it is preferable that the physical quantity measuring device further include an interferometer including a wedge, the wedge being the optical element, the interferometer being configured to output a second interfering light according to the measurement light.

In this configuration, the interferometer including the wedge as the optical element is provided. Moreover, the interferometer is configured to output the second interfering light according to the measurement light. This makes it possible to calculate the physical quantity of the object by detecting a phase change in interference fringes of the second interfering light according to the measurement light.

In the above aspect of the invention, it is preferable that the third light path and the fourth light path each include an optical fiber, and the optical fiber be provided with an optical coupler.

In this configuration, the third light path and the fourth light path each include an optical fiber. This makes it possible to reliably guide the third light outputted from the third light source to the optical sensor and reliably guide the measurement light and the third light outputted from the optical sensor to the optical element. Further, it is possible to reliably guide the third light outputted from the third light source to the optical element.

In addition, the optical fiber is provided with the optical coupler, which makes it possible to achieve switching between the third light path and the fourth light path by a simple configuration.

In the above aspect of the invention, it is preferable that the optical switching element include an optical chopper.

In this configuration, the optical switching element includes the optical chopper, which makes it possible to achieve switching between the third light path and the fourth light path by a simple configuration.

In the above aspect of the invention, it is preferable that the optical switching element include an optical switch.

In this configuration, the optical switching element includes the optical switch, which makes it possible to achieve switching between the third light path and the fourth light path by a simple configuration.

In the above aspect of the invention, it is preferable that the optical switching element include a movable beam splitter.

In this configuration, the optical switching element includes the movable beam splitter, which makes it possible to achieve switching between the third light path and the fourth light path by a simple configuration.

In the above aspect of the invention, it is preferable that the optical sensor be configured as a Fabry-Perot interferometric sensor.

In this configuration, the optical sensor is configured as the Fabry-Perot interferometric sensor, which makes it possible to measure a physical quantity such as pressure or distortion with a high accuracy.

BRIEF DESCRIPTION OF DRAWING(S)

Fig. 1 is a diagram illustrating a schematic configuration of a physical quantity measuring device according to a first exemplary embodiment.

Fig. 2 is a diagram illustrating a schematic configuration of a physical quantity measuring device according to a second exemplary embodiment.

Fig. 3 is a diagram illustrating a schematic configuration of a physical quantity measuring device according to a third exemplary embodiment.

Fig. 4 is a diagram illustrating a schematic configuration of a physical quantity measuring device according to a fourth exemplary embodiment.

Fig. 5 is a diagram illustrating a schematic configuration of a physical quantity measuring device according to a fifth exemplary embodiment.

DESCRIPTION OF EMBODIMENT(S)

First Exemplary Embodiment

Description will be made on a physical quantity measuring device 1 of a first exemplary embodiment of the invention on the basis of the drawings.

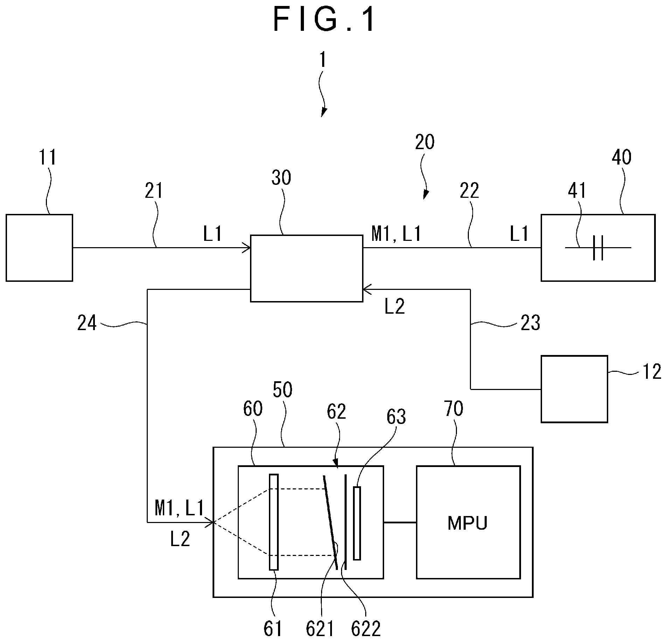

Fig. 1 is a diagram illustrating a schematic configuration of the physical quantity measuring device 1 of the first exemplary embodiment. It should be noted that the physical quantity measuring device 1 is configured to measure a physical quantity such as pressure, acceleration, displacement, inclination, or temperature.

As illustrated in Fig. 1, the physical quantity measuring device 1 includes a first light source 11, a second light source 12, an optical cable 20, an optical coupler 30, an optical sensor 40, and a light receiver 50.

First Light Source 11

The first light source 11 is a light source that emits a first light L1 with a broad-band wavelength. The first light source 11 is, for instance, an SC (Super Continuum) light source and configured to emit the first light L1 in a wavelength region of 1200 nm to 1600 nm. It should be noted that the first light source 11 is not limited to the above configuration and may be a combination of an LED (Light Emitting diode) light source, an ASE (Amplified Spontaneous Emission) light source, an SLD (Super Luminescent Diode) light source, an incandescent light bulb, and the like or may be a narrow-band light source that sweeps a broad band, such as a tunable laser. Further, the first light source 11 may be configured to emit the first light L1 in a wider wavelength region than the exemplary wavelength region or may be configured to emit the first light L1 in a narrower wavelength region than the exemplary wavelength region.

Second Light Source 12

The second light source 12 is a light source that emits a second light L2 with a broad-band wavelength as the first light source 11. The second light source 12 is, for instance, an SC light source and configured to emit the second light L2 in a wavelength region of 1200 nm to 1600 nm. In other words, in the exemplary embodiment, the second light source 12 is configured to emit the second light L2 with a wavelength in a band similar to that of the first light source 11. Moreover, in the exemplary embodiment, the first light source 11 and the second light source 12 are configured to be alternately lit up at regular intervals. For instance, the first light source 11 is lit up for 10 seconds and, subsequently, the second light source 12 is lit up for one second.

It should be noted that the second light source 12 is not limited to the above configuration and may be a combination of an LED light source, an ASE light source, an SLD light source, an incandescent light bulb, and the like or may be a narrow-band light source that sweeps a broad band, such as a tunable laser. Further, the second light source 12 may be configured to emit the second light L2 in a wider wavelength region than the exemplary wavelength region or may be configured to emit the second light L2 in a narrower wavelength region than the exemplary wavelength region. Incidentally, it is desirable that the first light source 11 and the second light source 12 be of the same type for practical purposes.

Optical Cable 20

The optical cable 20 includes a so-called multi-mode optical fiber, a protection member, and the like. In the exemplary embodiment, the optical cable 20 includes a first cable 21, a second cable 22, a third cable 23, and a fourth cable 24.

The first cable 21 transmits the first light L1 outputted from the first light source 11 to the optical coupler 30. The second cable 22 transmits the first light L1 entering the second cable 22 via the optical coupler 30 to the optical sensor 40 and transmits a measurement light M1 and the first light L1 outputted from the optical sensor 40 to the optical coupler 30. The third cable 23 transmits the second light L2 outputted from the second light source 12 to the optical coupler 30. The fourth cable 24 transmits the measurement light M1 and the first light L1 entering the fourth cable 24 via the optical coupler 30 to the light receiver 50 and transmits the second light L2 entering the fourth cable 24 via the optical coupler 30 to the light receiver 50. In other words, the first cable 21, the second cable 22, and the fourth cable 24 provide a first light path of the invention and the third cable 23 and the fourth cable 24 provide a second light path of the invention.

It should be noted that the first cable 21, the second cable 22, the third cable 23, and the fourth cable 24, which provide the optical cable 20, do not necessarily include multi-mode optical fibers and may include, for instance, single-mode optical fibers.

Optical Coupler 30

The optical coupler 30 is a so-called 2 × 2 coupler and the optical coupler 30 is provided in the optical cable 20 in the exemplary embodiment. Specifically, the optical coupler 30 is provided so that the first cable 21, the second cable 22, the third cable 23, and the fourth cable 24 are optically connected. The optical coupler 30 thus transmits the first light L1 outputted from the first light source 11 to the optical sensor 40 and transmits the measurement light M1 and the first light L1 outputted from the optical sensor 40 to the light receiver 50. Further, the optical coupler 30 transmits the second light L2 outputted from the second light source 12 to the light receiver 50.

Optical Sensor 40

The optical sensor 40 is located in a non-illustrated object and is configured to output the measurement light M1, which is in accordance with a physical quantity acting on the object. In the exemplary embodiment, the optical sensor 40 includes a sensor element for measurement 41 that lets in the first light L1 transmitted via the optical coupler 30 and outputs the reflected light to the optical coupler 30.

The sensor element for measurement 41, which includes a pair of reflective elements located close to each other, provides a Fabry-Perot interferometer. Specifically, the pair of reflective elements providing the sensor element for measurement 41 are formed at a predetermined distance and each function as a mirror. Moreover, the pair of reflective elements reflect light in a predetermined wavelength region. The pair of reflective elements thus provide a Fabry-Perot interferometer. In other words, the optical sensor 40 is configured as a Fabry-Perot interferometric sensor. The optical sensor 40 is thus configured to output the measurement light M1 in accordance with the physical quantity acting on the object.

Moreover, in the exemplary embodiment, the sensor element for measurement 41 outputs the measurement light M1, which is the reflected light, to the optical coupler 30 as described above. It should be noted that the sensor element for measurement 41 directly reflects a part of the first light L1 along with the measurement light M1. In other words, the optical sensor 40 outputs the measurement light M1 and the first light L1 to the optical coupler 30 as described above.

Light Receiver 50

The light receiver 50 lets in the measurement light M1 and the first light L1 outputted from the optical sensor 40 and the second light L2 outputted from the second light source 12 and computes the physical quantity acting on the object. In the exemplary embodiment, the light receiver 50 includes an interferometer 60 and an MPU 70.

Interferometer 60

The interferometer 60 is configured to output a first interfering light by causing interference of the measurement light M1 outputted from the optical sensor 40 and detect the first interfering light.

In the exemplary embodiment, the interferometer 60 includes a Fresnel cylindrical lens 61, a wedge 62, and a light detector 63.

The Fresnel cylindrical lens 61 is an optical lens having concentric grooves with all different angles relative to a resin sheet and the individual grooves act as bent surfaces, causing the incoming measurement light M1, first light L1, and second light L2 to be collected toward the wedge 62.

The wedge 62 causes interference of the measurement light M1 entering the wedge 62 via the Fresnel cylindrical lens 61 and outputs the first interfering light. It should be noted that the first light L1 is directly outputted without interference.

The second light L2 entering the wedge 62 via the Fresnel cylindrical lens 61 is also directly outputted without interference. In the exemplary embodiment, the wedge 62 has a first reflection surface 621 and a second reflection surface 622. It should be noted that the wedge 62 is an example of an optical element of the invention. In addition, the first interfering light and the first light L1 are examples of a first outgoing light of the invention and the second light L2 is an example of a second outgoing light.

In the exemplary embodiment, the second reflection surface 622 is located with an inclination at a predetermined angle relative to the first reflection surface 621. This causes penetration/reflection of the measurement light M1 through/on the first reflection surface 621 and the second reflection surface 622 and the penetrating/reflected measurement lights M1 interfere with each other to output the first interfering light.

The light detector 63 is configured to detect the first interfering light and the first light L1 outputted from the wedge 62 and output a first signal according to the first interfering light and the first light L1. Further, the light detector 63 is configured to detect the second light L2 outputted from the wedge 62 and output a second signal according to the second light L2.

In the exemplary embodiment, the light detector 63 includes a plurality of light detection elements arranged in an array on a back side of the second reflection surface 622. For instance, the light detector 63 includes a plurality of light detection elements including Si and that detect an interfering light in a wavelength region of short wavelengths, light detection elements including InGaAs and that detect an interfering light in a wavelength region of long wavelengths, or both, the light detection elements being arranged in an array.

It should be noted that the light detector 63 is not limited to the above configuration and only has to be configured to detect the first interfering light, the first light L1, and the second light L2 outputted from the wedge 62 and output the first signal and the second signal according to the first interfering light, the first light L1, and the second light L2.

As seen above, in the exemplary embodiment, the interferometer 60 is configured as a wedge shearing interferometer including the wedge 62.

It should be noted that the interferometer 60 is not limited to the above configuration and may include, for instance, a cylindrical lens in place of the Fresnel cylindrical lens 61 or may include none of lenses such as a Fresnel cylindrical lens and a cylindrical lens.

MPU 70

The MPU 70, which is a so-called Micro Processing Unit, is configured to receive an input of the first signal and the second signal outputted from the light detector 63 and compute the physical quantity acting on the object. In the exemplary embodiment, the MPU 70 determines interference fringes according to the first interfering light included in the first signal and calculates a phase change from a periodic change in intensity of the interference fringes. Moreover, the MPU 70, which obtains a correlation between the phase change and the physical quantity in advance, calculates the physical quantity according to the phase change.

In the exemplary embodiment, the first signal includes a signal according to the first light L1. The signal according to the first light L1 includes a disturbing signal due to a smudge or the like sticking to the first reflection surface 621 or the second reflection surface 622 of the wedge 62. The physical quantity calculated on the basis of the first signal is thus affected by the disturbing signal. In other words, the physical quantity calculated on the basis of the first signal includes an error according to the disturbing signal. Moreover, the error, which is attributed to the smudge sticking to the first reflection surface 621 or the second reflection surface 622, changes with the passage of time. Thus, even though the error according to the disturbing signal is obtained in advance, it is difficult to remove the error from the physical quantity calculated on the basis of the first signal.

Here, in the exemplary embodiment, the first light source 11 and the second light source 12 are configured to be alternately lit up at regular intervals as described above. The MPU 70 is thus configured to regularly detect an intensity of the second signal. Similarly to the signal according to the first light L1, the second signal includes a disturbing signal due to a smudge or the like sticking to the reflection surface 621 or the second reflection surface 622 of the wedge 62. Moreover, similarly to the disturbing signal according to the first signal L1, the disturbing signal included in the second signal changes with the passage of time. Thus, even when a disturbing signal attributed to the smudge or the like on the wedge 62 is included in the phase change based on the first signal, the MPU 70 is allowed to correct the disturbing signal with the disturbing signal included in the second signal as needed. Specifically, with the assumption that p denotes an element number of each of the light detection elements providing the light detector 63 and $I_{(p)}$ denotes waveform data regarding the first signal, $I_{(p)}$ may be represented by Expression (1) below.
[Math. 1]

$$I_{(p)} = Iin_{(p)} \cdot S_{(p)} \cdot \cdot \cdot \text{Expression (1)}$$

Here, $Iin_{(p)}$ denotes waveform data based on the first light L1 outputted from the first light source 11 and $S_{(p)}$ denotes waveform data based on the measurement light M1 outputted from the optical sensor 40. Moreover, $Iin_{(p)}$ includes an intensity distribution of the first light source 11 and a disturbing signal attributed to a smudge or the like on the wedge 62. Thus, $Iin_{(p)}$ is changeable due to the surrounding environment (temperature, humidity) or age deterioration of the light detection elements.

In addition, with the assumption that $Iref_{(p)}$ denotes waveform data regarding the second signal, $Iref_{(p)}$ may be represented by Expression (2) below.
[Math. 2]

$$Iref_{(p)} = Irefin_{(p)} \cdot \cdot \cdot \text{Expression (2)}$$

Here, $Irefin_{(p)}$ denotes waveform data based on the second light L2 outputted from the second light source 12. Moreover, similarly to $Iin_{(p)}$, $Irefin_{(p)}$ includes an intensity distribution of the second light source 12 and a disturbing signal attributed to a smudge on the wedge 62 or the like. Thus, $Irefin_{(p)}$ is changeable due to the surrounding environment or age deterioration of the light detection elements. In this regard, for $Irefin_{(p)}$, the surrounding environment or the age deterioration of the light detection elements are the same as that for $Iin_{(p)}$, so that a ratio of $Irefin_{(p)}$ to $Iin_{(p)}$ does not change. Accordingly, it is possible to eliminate a change in the disturbing signal attributed to the smudge on the wedge 62 or the like by correcting above Expression (1) using above Expression (2). Therefore, even if a smudge or the like sticks to the first reflection surface 621 or the second reflection surface 622 of the wedge 62, it is possible to correct the first signal including a disturbing signal attributed to the smudge or the like with the second signal as needed.

Effects of First Exemplary Embodiment

The first exemplary embodiment as described above is able to produce the following effects.

(1) In the exemplary embodiment, the first cable 21, the second cable 22, and the fourth cable 24 are provided so that the first light L1 outputted from the first light source 11 is to be outputted to the optical sensor 40 and the measurement light M1 and the first light L1 outputted from the optical sensor 40 are to be outputted to the interferometer 60 including the wedge 62, and the third cable 23 and the fourth cable 24 are provided so that the second light L2 outputted from the second light source 12 is to be outputted to the interferometer 60. Moreover, the wedge 62 is configured to let in the measurement light M1 and the first light L1 outputted from the optical sensor 40 and output the first interfering light and the first light L1 and let in the second light L2 outputted from the second light source 12 and output the second light L2. The first interfering light according to the measurement light M1 and the first light L1 are thus allowed to be corrected with the second light L2 as needed. This makes it possible to reduce an influence of a change in an environmental factor.

(2) In the exemplary embodiment, the interferometer 60 including the wedge 62 is provided, the wedge 62 being an optical element. Moreover, the interferometer 60 is configured to output the first interfering light according to the measurement light M1. This makes it possible to calculate the physical quantity of the object by detecting a phase change in the interference fringes of the first interfering light according to the measurement light M1.

(3) In the exemplary embodiment, the first cable 21, the second cable 22, the third cable 23, and the fourth cable 24, which provide the first light path and the second light path, include optical fibers. This makes it possible to reliably guide the first light L1 outputted from the first light source 11 to the optical sensor 40 and reliably guide the measurement light M1 outputted from the optical sensor 40 to the wedge 62. Further, it is possible to reliably guide the second light L2 outputted from the second light source 12 to the wedge 62.

In addition, the optical cable 20, which includes the optical fibers, is provided with the optical coupler 30. This makes it possible to achieve switching between the first cable 21, the second cable 22, the third cable 23, and the fourth cable 24, which provide the first light path and the second light path, by a simple configuration.

(4) In the exemplary embodiment, the optical sensor 40 is configured as a Fabry-Perot interferometric sensor, which makes it possible to measure a physical quantity such as pressure or distortion with a high accuracy.

Second Exemplary Embodiment

Next, description will be made on a second exemplary embodiment of the invention on the basis of the drawings.

The second exemplary embodiment is different from the first exemplary embodiment in that a physical quantity measuring device 1A includes a first optical coupler 31A and a second optical coupler 32A. It should be noted that in the second exemplary embodiment, the same reference numeral is used for the same component as or a similar component to that of the first exemplary embodiment and a description thereof is omitted.

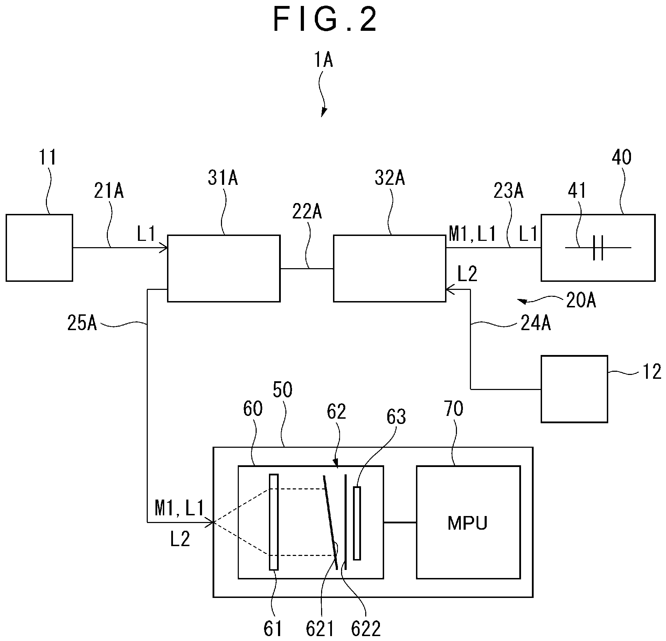

Fig. 2 is a diagram illustrating a schematic configuration of the physical quantity measuring device 1A of the second exemplary embodiment. It should be noted that the physical quantity measuring device 1A is configured to measure a physical quantity such as pressure, acceleration, displacement, inclination, or temperature as the above-described physical quantity measuring device 1 of the first exemplary embodiment.

As illustrated in Fig. 2, the physical quantity measuring device 1A includes a first light source 11, a second light source 12, an optical cable 20A, the first optical coupler 31A, the second optical coupler 32A, an optical sensor 40, and a light receiver 50.

Optical Cable 20A

Similarly to the above-described optical cable 20 of the first exemplary embodiment, the optical cable 20A includes a so-called multi-mode optical fiber, a protection member, and the like. In the exemplary embodiment, the optical cable 20A includes a first cable 21A, a second cable 22A, a third cable 23A, a fourth cable 24A, and a fifth cable 25A.

The first cable 21A transmits a first light L1 outputted from the first light source 11 to the first optical coupler 31A. The second cable 22A optically connects the first optical coupler 31A and the second optical coupler 32A. The third cable 23A transmits the first light L1 entering the third cable 23A via the first optical coupler 31A and the second optical coupler 32A to the optical sensor 40 and transmits a measurement light M1 and the first light L1 outputted from the optical sensor 40 to the second optical coupler 32A. The fourth cable 24A transmits a second light L2 outputted from the second light source 12 to the second optical coupler 32A. The fifth cable 25A transmits the measurement light M1 and the first light L1 entering the fifth cable 25A via the first optical coupler 31A and the second optical coupler 32A to the light receiver 50 and transmits the second light L2 entering the fifth cable 25A via the first optical coupler 31A and the second optical coupler 32A to the light receiver 50. In other words, the first cable 21A, the second cable 22A, the third cable 23A, and the fifth cable 25A provide the first light path of the invention and the second cable 22A, the fourth cable 24A, and the fifth cable 25A provide the second light path of the invention.

It should be noted that the first cable 21A, the second cable 22A, the third cable 23A, the fourth cable 24A, and the fifth cable 25A, which provide the optical cable 20A, do not necessarily include multi-mode optical fibers and may include, for instance, single-mode optical fibers.

First Optical Coupler 31A and Second Optical Coupler 32A

The first optical coupler 31A and the second optical coupler 32A are so-called $1 \times 2$ couplers and the first optical coupler 31A and the second optical coupler 32A are provided in the optical cable 20A in the exemplary embodiment. Specifically, the first optical coupler 31A is provided so that the first cable 21A, the second cable 22A, and the fifth cable 25A are optically connected. In addition, the second optical coupler 32A is provided so that the second cable 22A, the third cable 23A, and the fourth cable 24A are optically connected. Accordingly, the first optical coupler 31A transmits the first light L1 outputted from the first light source 11 to the second optical coupler 32A, and the first optical coupler 31A and the second optical coupler 32A transmit the measurement light M1 and the first light L1 outputted from the optical sensor 40 to the light receiver 50. Further, the first optical coupler 31A and the second optical coupler 32A transmit the second light L2 outputted from the second light source 12 to the light receiver 50.

Effects of Second Exemplary Embodiment

The second exemplary embodiment as described above is able to produce the following effect.

(5) In the exemplary embodiment, the optical cable 20A is provided with the optical coupler 31A and the second optical coupler 32A, each of which is in the form of a $1 \times 2$ coupler. This makes it possible to achieve switching between the first cable 21A, the second cable 22A, the third cable 23A, the fourth cable 24A, and the fifth cable 25A, which provide the first light path and the second light path, by a simple configuration.

Third Exemplary Embodiment

Next, description will be made on a third exemplary embodiment of the invention on the basis of the drawings.

The third exemplary embodiment is different from the first and second exemplary embodiments in that a physical quantity measuring device 1B includes an optical switching element 80B that switches a light path of a third light L3 outputted from a third light source 13B between a third light path and a fourth light path. It should be noted that in the third exemplary embodiment, the same reference numeral is used for the same component as or a similar component to those of the first and second exemplary embodiments and a description thereof is omitted.

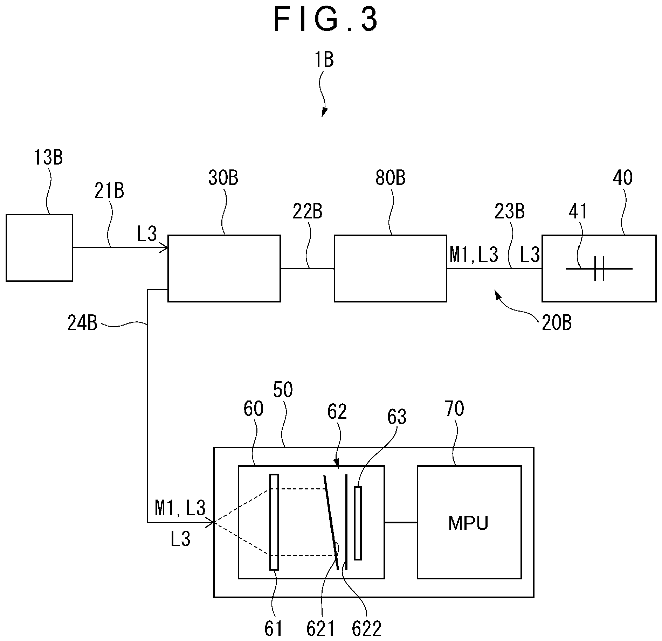

Fig. 3 is a diagram illustrating a schematic configuration of the physical quantity measuring device 1B of the third exemplary embodiment. It should be noted that the physical quantity measuring device 1B is configured to measure a physical quantity such as pressure, acceleration, displacement, inclination, or temperature as the above-described physical quantity measuring devices 1 and 1A of the first and second exemplary embodiments.

As illustrated in Fig. 3, the physical quantity measuring device 1B includes the third light source 13B, an optical cable 20B, an optical coupler 30B, an optical sensor 40, a light receiver 50, and the optical switching element 80B.

Third Light Source 13B

The third light source 13B is a light source that emits the third light L3 with a broad-band wavelength. The third light source 13B is, for instance, an SC (Super Continuum) light source and configured to emit the third light L3 in a wavelength region of 1200 nm to 1600 nm. It should be noted that the third light source 13B is not limited to the above configuration and may be a combination of an LED (Light Emitting diode), an ASE (Amplified Spontaneous Emission) light source, an SLD (Super Luminescent Diode) light source, an incandescent light bulb, and the like or may be a narrow-band light source that sweeps a broad band, such as a tunable laser. Further, the third light source 13B may be configured to emit the third light L3 in a wider wavelength region than the exemplary wavelength region or may be configured to emit the third light L3 in a narrower wavelength region than the exemplary wavelength region.

Optical Cable 20B

Similarly to the above-described optical cables 20 and 20A of the first and second exemplary embodiments, the optical cable 20B includes a so-called multi-mode optical fiber, a protection member, and the like. In the exemplary embodiment, the optical cable 20B includes a first cable 21B, a second cable 22B, a third cable 23B, and a fourth cable 24B.

The first cable 21B transmits the third light L3 outputted from the third light source 13B to the optical coupler 30B. The second cable 22B optically connects the optical coupler 30B and the optical switching element 80B. The third cable 23B transmits the third light L3 entering the third cable 23B via the optical coupler 30B and the optical switching element 80B to the optical sensor 40 and transmits a measurement light M1 and the third light L3 outputted from the optical sensor 40 to the optical switching element 80B. The fourth cable 24B transmits the measurement light M1 and the third light L3 entering the fourth cable 24B via the optical coupler 30B and the optical switching element 80B to the light receiver 50. In other words, the first cable 21B, the second cable 22B, the third cable 23B, and the fourth cable 24B provide the third light path of the invention and the first cable 21B, the second cable 22B, and the fourth cable 24B provide the fourth light path of the invention.

It should be noted that the first cable 21B, the second cable 22B, the third cable 23B, and the fourth cable 24B, which provide the optical cable 20B, do not necessarily include multi-mode optical fibers and may include, for instance, single-mode optical fibers.

Optical Coupler 30B

The optical coupler 30B is a so-called 1 × 2 coupler and the optical coupler 30B is provided in the optical cable 20B in the exemplary embodiment. Specifically, the optical coupler 30B is provided so that the first cable 21B, the second cable 22B, and the fourth cable 24B are optically connected. The optical coupler 30B thus transmits the third light L3 outputted from the third light source 13B to the optical sensor 40 and transmits the measurement light M1 and the third light L3 outputted from the optical sensor 40 to the light receiver 50. Further, the optical coupler 30B transmits the third light L3 outputted from the third light source 13B to the light receiver 50.

Optical Switching Element 80B

The optical switching element 80B includes a so-called optical chopper with a blade that is rotatable at a constant speed. Thus, in a case where the blade of the optical switching element 80B does not block the light path, the third light L3 outputted from the third light source 13B is to be transmitted to the optical sensor 40 and the measurement light M1 and the third light L3 outputted by the optical sensor 40 are to be inputted to the light receiver 50. In contrast, in a case where the blade of the optical switching element 80B blocks the light path, the third light L3 outputted from the third light source 13B is to be reflected by the blade of the optical switching element 80B and inputted to the light receiver 50. In other words, the optical switching element 80B regularly performs switching between the third light path and the fourth light path.

Consequently, the measurement light M1 and third light L3 and the third light L3 are alternately inputted to the wedge 62 of the interferometer 60 in the exemplary embodiment. Moreover, the wedge 62 outputs a second interfering light by causing interference of the measurement light M1 entering the wedge 62 via the Fresnel cylindrical lens 61 while outputting the third light L3 entering the wedge 62 via the Fresnel cylindrical lens 61. In other words, the second interfering light and the third light L3 are examples of a third outgoing light of the invention and the third light L3 is an example of a fourth outgoing light.

In the exemplary embodiment, the light detector 63 detects the second interfering light and the third light L3 outputted from the wedge 62 and outputs a third signal according to the second interfering light and the third light L3. Further, the light detector 63 detects the third light L3 outputted from the wedge 62 and outputs a fourth signal according to the third light L3.

Here, the MPU 70 determines interference fringes according to the second interfering light included in the third signal and calculates a phase change from a periodic change in intensity of the interference fringes. Moreover, the MPU 70 corrects a calculation result with the regularly inputted fourth signal. In other words, the MPU 70 is able to correct the calculation result based on the third signal by using the fourth signal as a reference signal as needed. Therefore, even if a smudge or the like sticks to the first reflection surface 621 or the second reflection surface 622 of the wedge 62, it is possible to correct the third signal including a disturbing signal attributed to the smudge or the like with the fourth signal as needed.

Effects of Third Exemplary Embodiment

The third exemplary embodiment as described above is able to produce the following effects.

(6) In the exemplary embodiment, the first cable 21B, the second cable 22B, the third cable 23B, and the fourth cable 24B are provided so that the third light L3 outputted from the third light source 13B is to be outputted to the optical sensor 40 and the measurement light M1 and the third light L3 outputted from the optical sensor 40 are outputted to the interferometer 60 including the wedge 62, and the first cable 21B, the second cable 22B, and the fourth cable 24B are provided so that the third light L3 outputted from the third light source 13B is to be outputted to the interferometer 60. In addition, the wedge 62 is configured to let in the measurement light M1 outputted from the optical sensor 40 and output the second interfering light. Moreover, the optical switching element 80B is provided to switch the light path for the third light L3 outputted from the third light source 13B between the third light path and the fourth light path. This makes it possible to correct the third signal according to the measurement light M1 and the third light L3 with the fourth signal according to the third light L3 as needed. This makes it possible to reduce an influence of a change in an environmental factor. Further, since the optical switching element 80B switches the light path for the third light L3, a light source for measurement and a light source for reference are allowed to be provided by a single light source to reduce the number of light sources.

(7) In the exemplary embodiment, the interferometer 60 including the wedge 62 is provided, the wedge 62 being an optical element. Moreover, the interferometer 60 is configured to output the second interfering light as the third outgoing light. This makes it possible to calculate the physical quantity of the object by detecting a phase change in the interference fringes of the second interfering light according to the measurement light M1.

(8) In the exemplary embodiment, the first cable 21B, the second cable 22B, the third cable 23B, and the fourth cable 24B, which provide the third light path and the fourth light path, include optical fibers. This makes it possible to reliably guide the third light L3 outputted from the third light source 13B to the optical sensor 40 and reliably guide the measurement light M1 and the third light L3 outputted from the optical sensor 40 to the wedge 62. Further, it is possible to reliably guide the third light L3 outputted from the third light source 13B to the wedge 62.

In addition, the optical cable 20B, which includes the optical fibers, is provided with the optical coupler 30. This makes it possible to achieve switching between the first cable 21B, the second cable 22B, the third cable 23B, and the fourth cable 24B by a simple configuration.

(9) In the exemplary embodiment, the optical switching element 80B includes the optical chopper, which makes it possible to achieve switching between the third light path and the fourth light path by a simple configuration.

Fourth Exemplary Embodiment

Next, description will be made on a fourth exemplary embodiment of the invention on the basis of the drawings.

The fourth exemplary embodiment is different from the first to third exemplary embodiments in that a physical quantity measuring device 1C includes an optical switch that is an optical switching element 80C. It should be noted that in the fourth exemplary embodiment, the same reference numeral is used for the same component as or a similar component to those of the first to third exemplary embodiments and a description thereof is omitted.

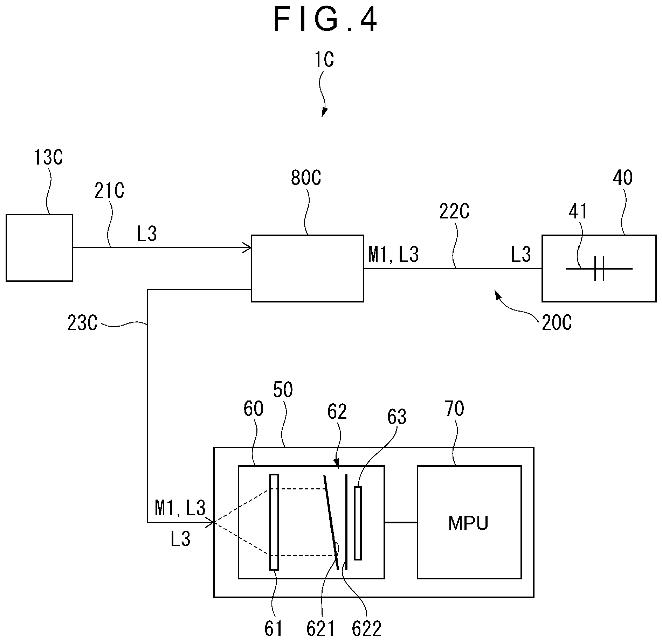

Fig. 4 is a diagram illustrating a schematic configuration of the physical quantity measuring device 1C of the fourth exemplary embodiment. It should be noted that the physical quantity measuring device 1C is configured to measure a physical quantity such as pressure, acceleration, displacement, inclination, or temperature as the above-described physical quantity measuring devices 1, 1A, and 1B of the first to third exemplary embodiments.

As illustrated in Fig. 4, the physical quantity measuring device 1C includes a third light source 13C, an optical cable 20C, an optical sensor 40, a light receiver 50, and the optical switching element 80C. It should be noted that the third light source 13C is configured similarly to the above-described third light source 13B of the third exemplary embodiment.

Optical Cable 20C

Similarly to the above-described optical cables 20, 20A, and 20B of the first to third exemplary embodiments, the optical cable 20C includes a so-called multi-mode optical fiber, a protection member, and the like. In the exemplary embodiment, the optical cable 20C includes a first cable 21C, a second cable 22C, and a third cable 23C.

The first cable 21C transmits a third light L3 outputted from the third light source 13C to the optical switching element 80C. The second cable 22C transmits the third light L3 entering the second cable 22C via the optical switching element 80C to the optical sensor 40 and transmits a measurement light M1 and the third light L3 outputted from the optical sensor 40 to the optical switching element 80C. The third cable 23C transmits the measurement light M1 and the third light L3 entering the third cable 23C via the optical switching element 80C to the light receiver 50. In other words, the first cable 21C, the second cable 22C, and the third cable 23C provide the third light path of the invention and the first cable 21C and the third cable 23C provide the fourth light path of the invention.

It should be noted that the first cable 21C, the second cable 22C, and the third cable 23C, which provide the optical cable 20C, do not necessarily include multi-mode optical fibers and may include, for instance, single-mode optical fibers.

Optical Switching Element 80C

The optical switching element 80C includes a so-called 1 × 2 optical switch. In other words, the optical switching element 80C has an input port connected to the first cable 21C and an output port connected to the second cable 22C and the third cable 23C. Thus, in a case where the output of the optical switching element 80C is switched to the port connected to the second cable 22C, the third light L3 outputted from the third light source 13C is to be transmitted to the optical sensor 40 and the measurement light M1 and the third light L3 outputted from the optical sensor 40 are to be inputted to the light receiver 50. In contrast, in a case where the output of the optical switching element 80C is switched to the port connected to the third cable 23C, the third light L3 outputted from the third light source 13C is to be inputted to the light receiver 50 via the optical switching element 80C. In other words, the optical switching element 80C regularly performs switching between the third light path and the fourth light path.

Consequently, in the exemplary embodiment, the MPU 70 is able to correct a phase change based on the third signal by using the fourth signal as a reference signal as needed as in the above-described third exemplary embodiment. Therefore, even if a smudge or the like sticks to the first reflection surface 621 or the second reflection surface 622 of the wedge 62, it is possible to correct the third signal including a disturbing signal attributed to the smudge or the like with the fourth signal as needed.

Effects of Fourth Exemplary Embodiment

The fourth exemplary embodiment as described above is able to produce the following effects. (10) In the exemplary embodiment, the optical switching element 80C includes the optical switch, which makes it possible to achieve switching between the third light path and the fourth light path by a simple configuration. Further, in the exemplary embodiment, it is possible to eliminate the necessity for an optical coupler to multiplex/demultiplex the third light L3 and the measurement light M1 to reduce the number of parts.

Fifth Exemplary Embodiment

Next, description will be made on a fifth exemplary embodiment of the invention on the basis of the drawings.

The fifth exemplary embodiment is different from the first to fourth exemplary embodiments in that a physical quantity measuring device 1D includes a movable beam splitter as an optical switching element 80D. It should be noted that in the fifth exemplary embodiment, the same reference numeral is used for the same component as or a similar component to those of the first to fourth exemplary embodiments and a description thereof is omitted.

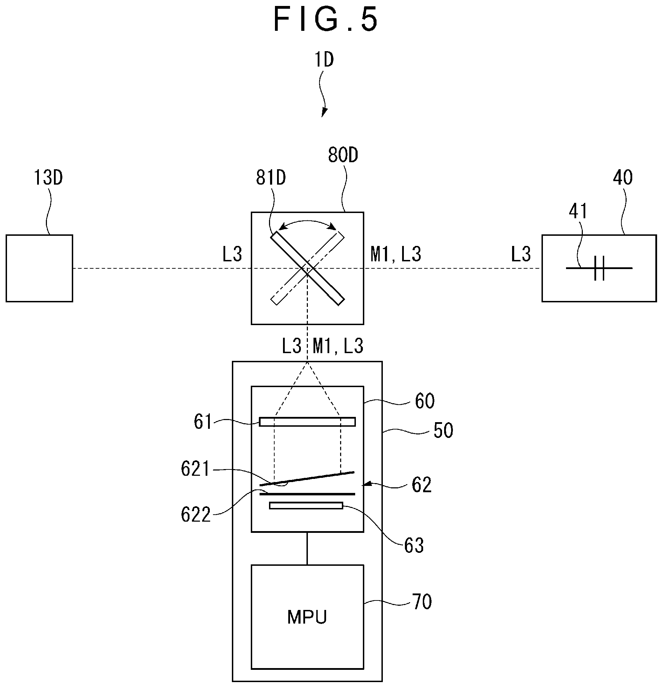

Fig. 5 is a diagram illustrating a schematic configuration of the physical quantity measuring device 1D of the fifth exemplary embodiment. It should be noted that the physical quantity measuring device 1D is configured to measure a physical quantity such as pressure, acceleration, displacement, inclination, or temperature as the above-described physical quantity measuring devices 1, 1A, 1B, and 1C of the first to fourth exemplary embodiments.

As illustrated in Fig. 5, the physical quantity measuring device 1D includes a third light source 13D, an optical sensor 40, a light receiver 50, and an optical switching element 80D. It should be noted that the third light source 13D is configured similarly to the above-described third light source 13B of the third exemplary embodiment. In addition, in the exemplary embodiment, no optical cable including an optical fiber is disposed and thus a third light L3 outputted from the third light source 13D and a measurement light M1 and the third light L3 outputted from the optical sensor 40 are to be transmitted through space.

Optical Switching Element 80D

The optical switching element 80D includes a so-called movable beam splitter. In other words, a plate 81D of the optical switching element 80D is configured to be movable. Specifically, the plate 81D is configured to be regularly rotatable between a state indicated by a solid line and a state indicated by a chain double-dashed line in Fig. 5. Thus, in a case where the plate 81D of the optical switching element 80D is rotated to the state indicated by the solid line in Fig. 5, the third light L3 outputted from the third light source 13D is to be transmitted to the optical sensor 40 and the measurement light M1 and the third light L3 outputted from the optical sensor 40 are to be inputted to the light receiver 50. In contrast, in a case where the plate 81D of the optical switching element 80D is rotated to the state indicated by the chain double-dashed line in Fig. 5, the third light L3 outputted from the third light source 13D is to be reflected by the plate 81D of the optical switching element 80D and inputted to the light receiver 50. In other words, the optical switching element 80D regularly performs switching between the third light path and the fourth light path.

Consequently, in the exemplary embodiment, the MPU 70 is able to correct a phase change based on the third signal by using the fourth signal as a reference signal as needed as in the above-described third and fourth exemplary embodiments. Therefore, even if a smudge or the like sticks to the first reflection surface 621 or the second reflection surface 622 of the wedge 62, it is possible to correct the third signal including a disturbing signal attributed to the smudge or the like with the fourth signal as needed.

Effects of Fifth Exemplary Embodiment

The fifth exemplary embodiment as described above is able to produce the following effects.
(11) In the exemplary embodiment, the optical switching element 80D includes the movable beam splitter, which makes it possible to achieve switching between the third light path and the fourth light path by a simple configuration. Further, in the exemplary embodiment, it is possible to eliminate the necessity for an optical cable including an optical fiber to reduce the number of parts.

Modifications

It should be noted that the invention is not limited to the above-described exemplary embodiments and modifications, improvements, and the like are within the scope of the invention, provided that the object of the invention is achievable.

In the above-described first to third exemplary embodiments, the optical couplers 30 and 30B, the first optical coupler 31A, and the second optical coupler 32A are used to multiplex/demultiplex the light paths but this is not limiting. For instance, a beam splitter may be used to multiplex/demultiplex the light paths.

In the above-described exemplary embodiments, the optical sensor 40 includes the sensor element for measurement 41, which includes the pair of reflective elements located close to each other to provide a Fabry-Perot interferometer; however, this is not limiting. For instance, the optical sensor may include a sensor element for measurement including a Fizeau interferometer, a Fabry-Perot etalon, or a FBG (Fiber Bragg Grating).

In the above-described exemplary embodiments, the interferometer 60 is configured as a wedge shearing interferometer including the wedge 62 but this is not limiting. For instance, the interferometer may be in a form of a Mach-Zehnder interferometer, a Michelson interferometer, a Fizeau interferometer, or the like. Further, the wedge may be configured as a birefringent wedge. Even in such a case, it is possible to correct a disturbing signal attributed to a smudge or the like sticking to the interferometer.

Further, in the above-described exemplary embodiments, the interferometer 60 including the wedge 62, which is an example of the optical element of the invention, is configured to output an interfering light but this is not limiting. For instance, the optical element of the invention may be configured as a spectroscopic element that disperses incoming light. In this case, light dispersed through the spectroscopic element is to be outputted as an outgoing light.

In the above-described exemplary embodiments, the physical quantity measuring devices 1, 1A, 1B, 1C, and 1D are each provided with the single optical sensor 40 but this is not limiting. For instance, the physical quantity measuring devices may each be provided with a plurality of optical sensors with respective different centers of wavelength peaks.

In this case, the plurality of optical sensors may be provided at the same location in an object. Such a configuration makes it possible to accurately measure, for instance, different physical quantities such as pressure and temperature at the same location in the object.

In addition, the plurality of optical sensors may be provided at respective different locations in an object. Such a configuration makes it possible to accurately measure changes in physical quantity at the different locations in the object.

In the above-described first and second exemplary embodiments, the first light source 11 and the second light source 12 are configured to be alternately lit up at regular intervals but this is not limiting. For instance, the first light source and the second light source may be configured to output lights in different wavelength regions so that the first light source and the second light source are always lit up. In this case, the first light source and the second light source output the lights in different wavelength regions, which makes it possible for the light detector to separately detect the first interfering light and the second interfering light.

In the above-described third exemplary embodiment, the optical switching element 80B including the optical chopper is configured to perform switching between the third light path and the fourth light path but this is not limiting. For instance, in addition to an optical cable providing the third light path optically connecting the third light source, the optical coupler, the optical sensor, and the light receiver, another optical cable providing the fourth light path optically connecting the third light source and the light receiver may be disposed with a delay line disposed in the optical cable providing the fourth light path. Such a configuration makes it possible to sufficiently increase a difference in light path length between the third light path and the fourth light path with respect to a modulation period or a pulse length of the third light source, allowing the light detector to separately detect the third outgoing light and the fourth outgoing light.

In the above-described exemplary embodiments, a filter or the like for weakening the second light L2 and the third light L3, which are lights for reference, may be disposed.

EXPLANATION OF CODE(S)

1, 1A, 1B, 1C, 1D...physical quantity measuring device, 11...first light source, 12...second light source, 13B, 13C, 13D...third light source, 20, 20A, 20B, 20C...optical cable, 21, 21A, 21A, 21B, 21C...first cable, 22, 22A, 22B, 22C...second cable, 23, 23AC, 23B, 23C...third cable, 24, 24A, 24B...fourth cable, 25A...fifth cable, 30, 30B...optical coupler, 31A...first optical coupler, 32A...second optical coupler, 40...optical sensor, 41...sensor element for measurement, 50...light receiver, 60... interferometer, 61...Fresnel cylindrical lens, 62...wedge, 63...light detector, 70...MPU, 80B, 80C, 80D...optical switching element, 81D...plate, 621...first reflection surface, 622...second reflection surface, L1...first light, L2...second light, L3...third light, M1...measurement light

**Claims**

1. A physical quantity measuring device comprising:

   a first light source configured to output a first light;
   a second light source configured to output a second light;
   an optical sensor configured to let in the first light outputted from the first light source and output a measurement light according to a physical quantity of an object and the first light;
   an optical element configured to let in the measurement light and the first light outputted from the optical sensor and output a first outgoing light and let in the second light outputted from the second light source and output a second outgoing light;
   a first light path for the first light outputted from the first light source to be outputted to the optical sensor and for the measurement light and the first light outputted from the optical sensor to be outputted to the optical element; and
   a second light path for the second light outputted from the second light source to be outputted to the optical element.

2. The physical quantity measuring device according to claim 1, further comprising an interferometer comprising a wedge, the wedge being the optical element, the interferometer being configured to output a first interfering light according to the measurement light.

3. The physical quantity measuring device according to claim 1 or 2, wherein

the first light path and the second light path each comprise an optical fiber, and
the optical fiber is provided with an optical coupler.

4. A physical quantity measuring device comprising:

a third light source configured to output a third light;
an optical sensor configured to let in the third light outputted from the third light source and output a measurement light according to a physical quantity of an object and the third light;
an optical element configured to let in the measurement light and the third light outputted from the optical sensor and output a third outgoing light and let in the third light outputted from the third light source and output a fourth outgoing light;
a third light path for the third light outputted from the third light source to be outputted to the optical sensor and for the measurement light and the third light outputted from the optical sensor to be outputted to the optical element;
a fourth light path for the third light outputted from the third light source to be outputted to the optical element; and
an optical switching element configured to switch a light path for the third light outputted from the third light source between the third light path and the fourth light path.

5. The physical quantity measuring device according to claim 4, further comprising an interferometer comprising a wedge, the wedge being the optical element, the interferometer being configured to output a second interfering light according to the measurement light.

6. The physical quantity measuring device according to claim 4 or 5, wherein

the third light path and the fourth light path each comprise an optical fiber, and
the optical fiber is provided with an optical coupler.

7. The physical quantity measuring device according to any one of claims 4 to 6, wherein the optical switching element comprises an optical chopper.

8. The physical quantity measuring device according to any one of claims 4 to 6, wherein the optical switching element comprises an optical switch.

9. The physical quantity measuring device according to any one of claims 4 to 6, wherein the optical switching element comprises a movable beam splitter.

10. The physical quantity measuring device according to any one of claims 1 to 9, wherein the optical sensor is configured as a Fabry-Perot interferometric sensor.

# F I G . 1

# FIG.2

# FIG.3

1B

# FIG.4

1C

13C

21C

L3

80C

22C

41 40

M1, L3

L3

20C

23C

50

60 62 63 70

M1, L3

L3

MPU

61 621 622

# FIG.5

1D

13D    81D    80D    40

41

L3    M1, L3    L3

L3    M1, L3

60
61    50
621
62
622    63

MPU    70

<div align="center">

**INTERNATIONAL SEARCH REPORT**

</div>

| International application No. |
|---|
| **PCT/JP2022/010067** |

| | |
|---|---|
| **A.** | **CLASSIFICATION OF SUBJECT MATTER** |
| | *G01B 11/00*(2006.01)i; *G01B 11/16*(2006.01)i; *G01B 11/26*(2006.01)i; *G01B 9/02*(2022.01)i<br>FI: G01B9/02; G01B11/16 G; G01B11/26 G; G01B11/00 G |

According to International Patent Classification (IPC) or to both national classification and IPC

| | |
|---|---|
| **B.** | **FIELDS SEARCHED** |

Minimum documentation searched (classification system followed by classification symbols)

      G01B11/00; G01B11/16; G01B11/26; G01B9/02

Documentation searched other than minimum documentation to the extent that such documents are included in the fields searched

      Published examined utility model applications of Japan 1922-1996
      Published unexamined utility model applications of Japan 1971-2022
      Registered utility model specifications of Japan 1996-2022
      Published registered utility model applications of Japan 1994-2022

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | JP 2000-292705 A (OLYMPUS OPTICAL CO., LTD.) 20 October 2000 (2000-10-20)<br>paragraphs [0002], [0040], fig. 11, 12 | 1-10 |
| Y | JP 3-15727 A (FUOTONETEITSUKU) 24 January 1991 (1991-01-24)<br>page 3, upper left column, line 10 to upper right column, line 16, fig. 1 | 1-10 |
| Y | CD-ROM of the specification and drawings annexed to the request of Japanese Utility Model Application No. 22705/1992 (Laid-open No. 81649/1993) (ONO SOKKI CO., LTD.) 05 November 1993 (1993-11-05), fig. 1, paragraph [0011] | 4-10 |
| Y | JP 7-72005 A (CANON INC.) 17 March 1995 (1995-03-17)<br>paragraph [0029], fig. 6 | 10 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 May 2022** | **07 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/010067**

| Patent document cited in search report | | | Publication date (day/month/year) | Patent family member(s) | Publication date (day/month/year) |
|---|---|---|---|---|---|
| JP | 2000-292705 | A | 20 October 2000 | US 6496267 B1 column 1, lines 13-47, column 10, lines 53-63, fig. 11, 12 | |
| JP | 3-15727 | A | 24 January 1991 | US 5349439 A column 3, lines 21-53, fig. 1 EP 390615 A2 FR 2641861 A1 | |
| JP | 5-81649 | U1 | 05 November 1993 | (Family: none) | |
| JP | 7-72005 | A | 17 March 1995 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060061768 A1